# EUROPÄISCHE PATENTANMELDUNG

(11) **EP 0 524 451 A2**
(43) Veröffentlichungstag der Anmeldung: **27.01.1993**
(21) Anmeldenummer: 92110919.5
(22) Anmeldetag: 27.06.1992
(51) Int. Cl.: F25D 23/06, F16B 21/08, F16B 21/07, F16B 5/06, F16B 13/12

(54) **Kühlschrank und Gefrierschrank**

(30) Priorität: 26.07.1991 DE 4124805
(71) Anmelder: Licentia Patent-Verwaltungs-GmbH, D-60596 Frankfurt (DE)
(72) Erfinder: Boller, Dieter, W-3504 Kaufungen II (DE)
(74) Vertreter: Breiter, Achim, Dipl.-Ing. (FH)

(57) **Zusammenfassung**

Bei einem Kühlschrank ist an einer Kunststoffwand (1) ein Bauteil nachträglich festgesetzt. Um hierbei mit einfachem Aufwand eine sichere Befestigung zu erzielen, weist die Kunststoffwand (1) eine einendig geschlossene, hohle Ausformung (2) auf, die wenigstens eine zylindrische oder prismatische Mantelfläche (3) besitzt. An der Mantelfläche (3) ist dabei reibschlüssig ein Klemmstück (6) festgesetzt, wobei zwischen dem Klemmstück und der Kunststoffwand das Bauteil (12) gehalten ist.

## Beschreibung

Die Erfindung betrifft einen Kühlschrank gemäß dem Oberbegriff des Anspruchs 1.

Bei einem bekannten Kühlschrank dieser Art (DE-GM 19 62 946) ist zur Befestigung eines Halters für einen Verdampfer in einer senkrechte Seitenwand des aus Kunststoff gefertigten Innenbehälters ein Durchbruch vorgesehen, hinter dem sich eine Wärmeisolierschicht befindet. In diesen Durchbruch ist ein Spreizzapfen eingesetzt, der Teil eines in den Innenbehälter ragenden Halters zur Abstützung des Verdampfers ist. Zur Festlegung des Spreizzapfens in dem angepaßten Durchbruch dient ein vom Innenbehälter her in den Spreizzapfen (1) einzutreibender Spreizstift. Bei diesem Aufbau besteht die Gefahr, daß durch den Durchbruch Feuchtigkeit vom Innenbehälter aus in die Wärmeisolation eindringt und diesselbe weitgehend unwirksam werden läßt. Außerdem ist neben dem Halter für den Verdampfer noch ein Spreizstift erforderlich, der in einem besonderen Arbeitsgang montiert werden muß.

Der Erfindung liegt die Aufgabe zugrunde, bei einem Kühlschrank gemäß dem Oberbegriff des Anspruchs 1 Maßnahmen zu treffen, durch welche bei einfachem Herstellungs- und Montageaufwand eine Feuchtigkeitswanderung durch die Kunststoffwand hindurch sicher vermieden wird.

Die Lösung dieser Aufgabe erfolgt gemäß der Erfindung durch die kennzeichnenden Merkmale des Anspruchs 1.

Bei einer Ausgestaltung eines Kühlschranks gemäß der Erfindung bleibt die Kunststoffwand, an welcher ein Bauteil festzusetzen ist, geschlossen, wobei die für die Halterung erforderliche Ausformung bei der Herstellung der Kunststoffwand, insbesondere des Innenbehälters im Blas-, Tiefzieh- oder Spritzwerkzeug ohne besonderen Aufwand ausgebildet werden kann. Für die Befestigung eines Bauteils braucht dann lediglich ein der Außen- oder Innenkontur im Querschnitt angepaßtes Klemmstück vorgesehen zu werden, das mittels eines angeformten Flansches das zu befestigende Bauteil in Anlage mit der Kunststoffwand hält. Vorzugsweise weist dabei das Bauteil einen Durchbruch auf, der bei in die hohle Ausformung eingestecktem Klemmstück zumindest dem Innendurchmesser der Ausformung entspricht und an der der Kunststoffwand abgewandten Seite vom Flansch des Klemmstücks übergriffen wird. Wenn der Durchbruch des Bauteils dagegen den Außenumfang der Ausformung übergreift, wird das Klemmstück als Ring ausgebildet, welcher am Außenumfang reibschlüssig gehalten wird und mit seinem der Kunststoffwand zugewandten Flansch den Rand des Durchbruchs übergreift. Die am Klemmstück vorgesehenen elastischen Stützrippen zur Erzeugung des erforderlichen Reibschlusses sind insbesondere nach Art von Gewindegängen wendelförmig angeordnet und im Querschnitt sägezahlförmig ausgebildet, wobei die flach ansteigende Flanke in Einschubrichtung des Klemmstücks weist. Der mit den Stützrippen versehene Teil des Klemmstücks läßt sich dadurch mit relativ geringem Kraftaufwand in bzw. auf die Ausformung aufdrücken. Für das Herausziehen ist jedoch in Folge des Reibschlusses und der sich aufspreizenden Stützrippen ein wesentlich höherer Kraftaufwand erforderlich. Durch die Anordnung der Stützrippen nach Art eines Gewindes bietet sich dann aber die Möglichkeit, das Klemmstück durch Drehen wie eine Schraube von der Ausformung zu lösen. Zweckmäßig ist daher das Klemmstück mit einer Schlitz- oder Mehrkantvertiefung versehen, um mit einem angepaßten Werkzeug die Ausschraubbewegung vornehmen zu können.

Für die Befestigung eines Bauteils kann auch ein der Innenkontur der Ausformung im Querschnitt angepaßtes Klemmstück als Spreizelement vorgesehen werden, das z. B. mittels eines angeformten Flansches das zu befestigende Bauteil allein oder im Zusammenwirken mit der zugehörigen Kunststoffwand hält. Vorzugsweise weist das Spreizelement mehrere, radial aufspreizbare Arme auf, zwischen die eine Schraube oder Spreizstift vom Innenraum des Innenbehälters aus eingedreht/eingedrückt ist. Mittels der Schraube bzw. des Spreizstifts wird dabei der Reibschluß zwischen den insbesondere gezahnten Armen und der Innenmantelfläche durch radiales Aufspreizen wesentlich erhöht. Die Schraube bzw. der Spreizstift kann dabei eine angepaßte Bohrung im Bauelement durchgreifen und dasselbe allein am Spreizelement festsetzen. Die Auflagefläche des Bauelements kann jedoch im Bereich der Einformung größer sein als der Radius dieser Einformung, so daß beim Eintreiben der Schraube bzw. des Spreizstifts das Bauelement zwischen dem Kopf der Schraube bzw. des Spreizstifts und dem Rand der Einformung gehalten wird. Daneben kann das Spreizelement jedoch auch einen radial ausladenden Ringbund an seinem dem Innenraum des Innenbehälters zugewandten Ende aufweisen, wobei das Spreizelement einen Durchbruch im Bauelement durchgreift, so daß der Ringbund diesen Durchbruch radial übergreift und bei in die Einformung eingedrücktem Spreizelement das Bauelement in Anlage mit dem Rand der Einformung bzw. der zugehörigen Wand hält. Die Einformung kann im übrigen wie das ggf. daran angepaßte Spreizelement im Querschnitt rund oder polygonal ausgebildet sein. In jedem Fall sind Bohrungen in der Wand des Innenbehälters nicht erforderlich. Es brauchen auch keine Bleche oder ähnliche Hilfsmittel für Schraubbefestigungen hinterlegt zu werden und insbesondere tritt keine Rißbildung auf, die sonst von den Bohrungen aufgrund der Kerbwirkung von Kunststoffteilen ausgeht. Dabei ist diese Halterung jederzeit lösbar.

Die Erfindung ist nachfolgend anhand der Zeichnungen von Ausführungsbeispielen näher erläutert.

Es zeigen:
Fig. 1 eine Kunststoffwand eines nicht näher näher dargestellten Kühlschranks im Bereich einer Halterung für Bauteile, bei welcher das Klemmstück in eine Ausformung eingedrückt ist und
Fig. 2 eine Anordnung mit auf den Außenumfang einer Ausformung aufgesetztem Klemmstück.
Fig. 3. eine teilweise dargestellte Wand eines nicht näher angegebenen Kühlgeräts im Bereich einer Halterung für Bauteile, bei welcher ein Spreizelement in einer Ausformung der Wand versenkt angeordnet ist und
Fig. 4 eine entsprechende Anordnung, bei welcher das Spreizelement eine unmittelbare Haltefunktion für ein Bauelement ausübt.

Aus einer Kunststoffwand 1 eines nicht näher dargstellten Innenbehälters eines Kühl- oder Gefrierschranks steht senkrecht eine hutförmige hohle Ausformung heraus, die einstückig mit der Kunststoffwand 1 durch Blasformen, Tiefziehen oder Spritzen verbunden ist. Die Ausformung 2 besitzt eine zylindrische oder prismatische Innenmantelfläche 3 oder Außenmantelfläche 4 und ist einendig durch eine Abdeckwand 5 verschlossen. Mit der Ausformung 2 steht ein Klemmstück 6 reibschlüssig in Eingriff.

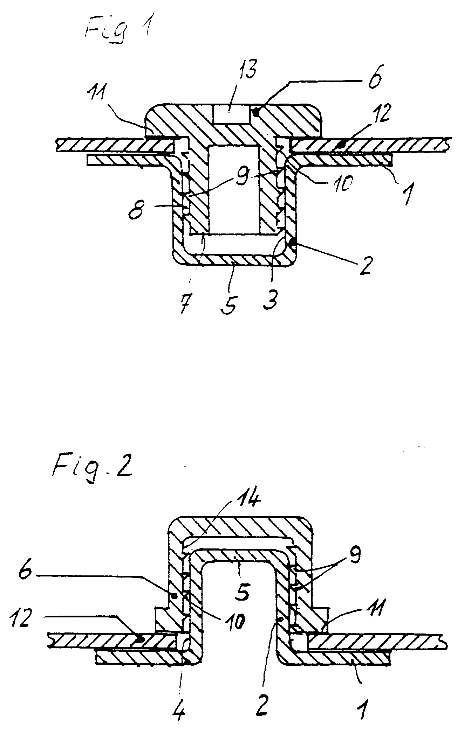

Gemäß Figur 1 weist das im Längsschnitt T-förmige Klemmstück 6 einen hohlzylindrischen Zapfen 7 auf, der in die hohle Ausformung von der offenen Seite her eingesetzt ist. Am Außenumfang 8 trägt der Hohlzapfen 7 elastisch an der Innenmantelfläche 2 reibschlüssig anliegende Stützrippen 9, die dem Zapfen 7 vor dem Einsezten eine Außenkontur geben, die größer als der dichte Querschnitt innerhalb der hohlen Ausformung ist. Dadurch legen sich diese Stützrippen 9 beim Eindrücken des Hohlzapfens 7 reibschlüssig an die Innenmantelfläche 3 an. Die Stützrippen sind dabei im Querschnitt nach Art von Sägezähnen ausgebildet, wobei die flach ansteigenden Flanken 10 in Einschubrichtung des Klemmstücks 6 weisen. Beim Einschieben neigen sich die Stützrippen 9 daher entgegen der Einschubrichtung, so daß das Klemmstück 6 mit relativ geringem Kraftaufwand in die Ausformung 2 einzudrücken ist. Die radial nach außen wirkende Aufspreizkraft der Stützrippen 9 bewirkt dabei den angestrebten Klemmschluß. Durch die Reibungskräfte wird diese Klemmkraft noch vergrößert, da sich dann beim Herausziehen des Klemmstücks 6 die Stützrippen 9 weiter aufzuspreizen versuchen und so den Klemmschluß verstärken. Um dennoch ein Lösen des Klemmstücks zu ermöglichen, sind die Stützrippen nach Art eines Gewindeganges wendelförmig auf dem Außenumfang 8 des Hohlzapfens 7 angeordnet. Dadurch kann durch Drehen das Klemmstück 6 aus der Anformung 2 herausgeschraubt werden. Der Hohlzapfen 7 ist an seiner der Abschlußwand 5 abgwandten Seite mit einem Flansch 11 versehen, der parallel zur Kunststoffwand 1 gerichtet ist. Zwischen dem Flansch 11 und der Kunststoffwand befindet sich dabei eine Lasche 12 mit einem dem Durchmesser des Hohlzapfens 7,8 angepaßten Durchmesser, wobei der Hohlzapfen 7,8 durch den Durchbruch hindurchgreift.

Hierdurch wird die Lasche 12 eines zu befestigenden Bauteils fest an der Wand 1 gehalten. Zum Ausdrehen des Klemmstücks 6 kann in dem den Flansch bildenden Kopf des Klemmstücks 6 ein Schlitz 13 für den Eingriff eines Schraubendrehers vorgesehen sein.

Bei der Ausführungsform nach Figur 2 ist bei äquivalenter Gestaltung der Ausformung 2 das hutförmige Klemmstück 6 auf die Außenmantelfläche 4 aufgesetzt. Dementsprechend sind hier die Stützrippen 9 am Innenumfang des Klemmstücks 6 vorgesehen. Ihre Bemessung in Bezug auf die Ausformung 2 ist dabei wieder so getroffen, daß der erforderliche Klemmschluß und die weiteren Wirkungen wie zu Figur 1 beschrieben eintritt. Das Klemmstück bildet hierbei einen die Außenumfangsfläche 4 der Ausformung 2 umgreifenden Ring, der an seinem Innenumfang 14 die elastischen, an der Außenmantelfläche 4 reibschlüssig anliegenden Stützrippen 9 trägt. Der Außenumfang dieses Klemmstücks 6 kann dabei gerändelt sein, um das Abschrauben zu erleichtern. Es kann jedoch auch in der den Ring abschließenden Deckelwand 15 eine dem Schlitz 13 entsprechende Einformung für das Einsetzen eines Werkzeugs vorgesehen sein. Auch hier hält das Klemmstück 6 mit seinem an der freien Stirnseite vorgesehenen Flansch 11 die Lasche 12 des Bauteils in fester Anlage mit der Kunststoffwand 1.

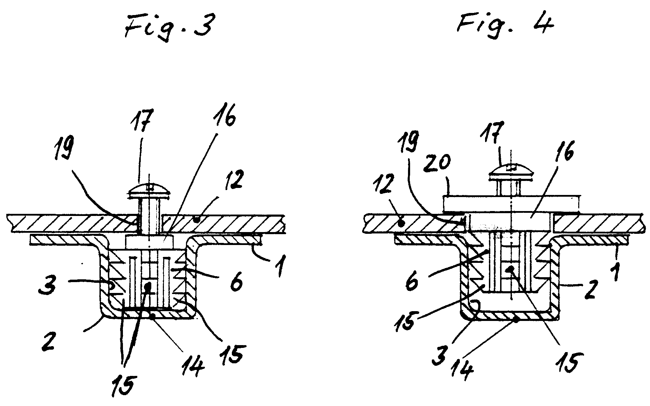

Gemäß den Fig. 3 und 4 besitzt die Ausformung 2 eine zylindrische oder prismatische Innenmantelfläche 3 und ist einendig durch eine Abdeckwand 14 verschlossen. In der Ausformung 2 sitzt ein Klemmstück als Spreizelement 6 reibschlüssig fest. Das Spreizelement 6 weist mehrere um eine zentrale Bohrung herum angeordnete, radial aufspreizbare Arme 15 auf, die durch mehrere, von dem der Abdeckwand 14 benachbarten Ende ausgehenden Schlitzen voneinander getrennt sind. Dabei verläuft die Bohrung achsengleich mit der Ausformung 2 und ist im Bereich des den Innraum des Innenbehälters zugewandten Kopfendes 16 des Spreizelements 6 zylindrisch ausgebildet und verjüngt sich zur Abdeckwand 14 hin. Durch Eintreiben einer Schraube 17 oder eines entsprechenden Spreizstifts in diese Bohrung werden die Arme 15 des Spreizelements 6 radial aufgespreizt und gelangen so in reibschlüssigem Eingriff mit der Innenmantelfläche 3 der Einformung 2.

Gemäß Fig. 3 ist das Spreizelement 6 in der Einformung 2 versenkt angeordnet. Auf die dem Innenraum eines Innenbehälters zugewandte Seitenfläche der Kunststoffwand 1 ist eine den Rand der Einformung 2 radial übergreifende Lasche eines Bauelements 12 aufgelegt. In diesem Bauelement befindet sich eine dem Durchmesser der Schraube 17 angepaßte Bohrung 19, deren Durchmesser kleiner als der Durchmesser des Schraubenkopfes ist. Hierdurch kann das Bauelement 12 durch entsprechend weites Eindrehen der Schraube 7 gegenüber der Wand 1 festgelegt werden.

Bei der Ausführungsform gemäß Fig. 4 besitzt das Bauelement 12 einen Durchbruch 19 mit einem den Außenabmessungen des Spreizelements 6 angepaßten Durchmesser. Dabei ist das Kopfende 16 des Spreizelements 6 dem Querschntt der Bohrung 19 im wesentlichen angepaßt und greift in diese Bohrung 19 ein. Ein axial auf das Kopfende 16 aufgesetzter Ringbund 20 übergreift dabei radial den Randbereich des Durchbruchs 19. Beim Festziehen der Schraube 17 werden hier wiederum die Arme 15 des Spreizelements 6 in reibschlüssigen Kontakt mit der Innenmantelfläche 3 der Einformung 2 gebracht, wobei hier der Ringbund 20 das Bauelement 12 in Anlage mit der Kunststoffwand 1 hält. Ein metallischer Kontakt der Schraube 17 bzw. des Spreizstifts mit dem Bauelement 12 wird hierdurch vermieden. Das Spreizelement besteht dabei insbesondere aus einem Kunststoff, während das Bauelement 12 insbesondere ein Kältemittelverdampfer ist.

Die erfindungsgemäße Befestigungsvorrichtung dient zum Festsetzen von Funktionsteilen an Kunststoff-Formteilen, wobei die Funktionsteile leichten bis mittleren Belastungen ausgesetzt sind. Dabei braucht die Wand 1 nicht durchbrochen zu werden und es ergibt sich eine einfache Montagemöglichkeit. Es wird auch die Rißbildung vermieden, die erfahrungsgemäß an den Rändern von Bohrungen eintreten. Zudem erfolgt das Befestigen lediglich mit einem zu handhabenden Bauelement.

## Patentansprüche

1. Kühl- oder Gefrierschrank mit einer Kunststoffwand, insbesondere in einem Innenbehälter, an der ein Bauteil nachträglich festgesetzt ist, dadurch gekennzeichnet, daß die Kunststoffwand (1) eine einendig geschlossene, hohle Ausformung (2) aufweist, die wenigstens eine zylindrische oder prismatische Mantelfläche (3,49 aufweist, daß an der Mantelfläche (3,4) reibschlüssig ein Klemmstück (6) festgesetzt ist und daß allein am Klemmstück (6) oder zwischen einem Flansch (11) am Klemmstück (6) und der Kunststoffwand (1) im Bereich der Ausformung (2) das Bauteil (12) festgesetzt ist.

2. Kühlschrank nach Anspruch 1, dadurch gekennzeichnet, daß das Bauteil (12) einen die Ausformung (2) umgreifenden, angepaßten Durchbruch aufweist.

3. Kühlschrank nach Anspruch 1 oder 2, dadurch gekennzeichnet, daß das Klemmstück (6) einen in die Innenfläche (3) der Ausformung (2) eingreifenden Zapfen (7) aufweist, der an seinem Außenumfang (8) elastisch an der Innenmantelfläche (2) reibschlüssig anliegende Stützrippen (9) aufweist.

4. Kühlschrank nach Anspruch 1 oder 2, dadurch gekennzeichnet, daß das Klemmstück (6) einen die Außenmantelfläche (4) der Ausformung (2) umgreifendne Ring aufweist, der an seinem Innenumfang (14) elastisch an der Außenmantelfläche (4) reibschlüssig anliegende Stützrippen (9) aufweist.

5. Kühlschrank nach Anspruch 3 oder 4, dadurch gekennzeichnet, daß die Stützrippen (9) nach Art von Gewindegängen wendelförmig angeordnet sind.

6. Kühlschrank nach Anspruch 3 oder einem der folgenden, dadurch gekennzeichnet, daß die Stützrippen (9) im Querschnitt nach Art von Sägezähnen ausgebildet sind, wobei die flach ansteigenden Flanken (10) in Einschubrichtung des Klemmstücks (6) weisen.

7. Kühlgerät nach Anspruch 1 oder einem der folgenden, dadurch gekennzeichnet, daß das als Spreizelement (6) ausgebildete Klemmstück mehrere, radial aufspreizbare Arme (15) aufweist, zwischen die eine Schraube (17) oder Spreizstift vom Innenraum eingedreht/eingedrückt ist.

8. Kühlgerät nach Anspruch 1 ode einem der folgenden, dadurch gekennzeichnet, daß die Schraube (17) bzw. der Spreizstift eine Bohrung (19) im Bauelement durchgreift.

9. Kühlgerät nach Anspruch 1 oder einem der folgenden, dadurch gekennzeichnet, daß das Spreizelement (6) einen radial ausladenden Ringbund (20) an seinem dem Innenraum des Innenbehälters (1) zugewandten Ende aufweist, daß das Spreizelement (6) einen Durchbruch (19) im Bauelement (12) durchgreift und daß der Ringbund (20) den dem Innenraum zugewandten Rand des Durchbruchs (19) radial übergreift.
